Europäisches Patentamt

European Patent Office

Office européen des brevets

(11) Publication number: **0 394 466 B1**

# EUROPEAN PATENT SPECIFICATION

(45) Date of publication of patent specification: **12.01.94**  (51) Int. Cl.5: **B65G 53/30**

(21) Application number: **89910181.0**

(22) Date of filing: **14.09.89**

(86) International application number:
**PCT/JP89/00945**

(87) International publication number:
**WO 90/03322 (05.04.90 90/08)**

(54) **FORCED FEED SYSTEM FOR MATERIALS UTILIZING COMPRESSED AIR.**

(30) Priority: **19.09.88 JP 234588/88**

(43) Date of publication of application:
**31.10.90 Bulletin 90/44**

(45) Publication of the grant of the patent:
**12.01.94 Bulletin 94/02**

(84) Designated Contracting States:
**BE CH DE FR GB IT LI LU NL SE**

(56) References cited:
**EP-A- 0 151 223**
**JP-A- 61 900**
**JP-A- 5 936 027**
**US-A- 2 149 633**
**US-A- 3 744 537**

(73) Proprietor: **MORI-GUMI CO. LTD.**
**5-17, Doshomachi 4-chome**
**Chuo-ku**
**Osaka-shi**
**Osaka 541(JP)**

Proprietor: **TAGUCHI, Akira**
**8-14, Kamikosaka 2-chome**
**Higashiosaka-shi**
**Osaka 577(JP)**

(72) Inventor: **TAGUCHI, Akira**
**8-14, Kamikosaka 2-chome**
**Higashiosaka-shi Osaka 577(JP)**

(74) Representative: **Blanco White, Henry Nicholas**
**et al**
**ABEL & IMRAY**
**Northumberland House**
**303-306 High Holborn**
**London WC1V 7LH (GB)**

EP 0 394 466 B1

# Description

This invention relates to a method of transferring material using compressed air and, more particularly, to a method of transferring material by pressure which transfers, with stirring if necessary, such materials as water, sludge-like liquids(such as fertilizers and mud), deposits including sand and pebbles at water bottoms, and submarine oil, and which is applicable for such uses as spreading of fertilizers, dredging of water bottoms, gathering of minerals in the same and extracting crude oil from submarine oil fields.

Conventionally, pumps have been used to draw up from lower levels or push up to higher levels regular liquids or liquids which include viscous substances or solid substances such as sand and pebbles. Various types of pumps have been developed in accordance with the type and nature of the materials to be transferred, but there have been a number of problems. Namely, such pumps are not applicable for all purposes but the applicability of any particular pump is rather limited to a specific purpose; they are expensive; the distance through which liquid can be transferred is short; the transferable quantity of liquid is small; and they consume much energy.

Therefore, it is necessary to connect many pumps like relay stations in order to draw up the liquid from depths that may be more than several hundred meters below the ground level, or to push it up several hundred meters above the ground level. In addition to the height and the depth, the extent of the area over which the liquid is to be supplied affects the number of pumps required. Many pumps are inevitably required in order to supply the liquids to many points extending over a wide area. To construct special kinds of pumps, or to increase the number of pumps, requires an additional investment compared with the use of only one motor, as well as increased equipment costs. Particularly in the case of liquids which contain sludge or solid substances, mechanical durability is poor because the structure of the pump allows viscous or solid substances to enter its mechanism, which leads to the need for frequent repairs and replacements of components caused by breakdown and wear. Besides, pumps are helpless against freezing of the liquid contained in the pumps themselves.

Pumps have played a great role in displacing various liquids, thereby providing them with potential energy. It is not too much to say that man has been completely dependent on pumps. Pumps, however, have the problems stated above. Stated in relation to this inventiuon, these problems are as follows.

(1) Pumps which draw up or push up liquids which contain viscous or solid substances are, in general, expensive and have high operating costs, and their transfer distance is short. For this reason, when spreading a large quantity of liquid over a wide area along the slopes of mountains higher than several hundred meters, or when pumping back a large quantity of water to an upper reservoir utilizing excess electricity during the night at hydroelectric power plants, or when removing or gathering sand and pebbles or other deposits from the bottom of water, it becomes necessary to operate a large pump or many pumps like relay stations and, since breakdown of one unit damages the operation of the whole system, sophisticated instrumentation is required, including measures against breakdown, which necessitates large expenditures on the equipment. Whenever pumps are used, those are unavoidable problems.

(2) Particularly when drawing up or pushing up liquids containing viscous or solid substances, repairs and replacement of components are necessary because of breakdown or wear in the mechanism, and mechanical durability is decreased because the mechanical structure of pumps allows the said substances to run against the pump mechanism through which the liquids flow.

(3) In the winter season, lagging and heating are required for pumps arid connected pipes in order to prevent freezing. At present, there are no effective freeze-prevention measures for pumps and pipes to be installed over a wide area, so that pumps and connecting pipes often burst or get damaged by a cold spell, thereby causing the operation to halt. Complete freeze-prevention is not currently realistic because of the excessive costs involved. In order to resolve those problems, it is necessary to move away from pumps including a mechanical structure which acts on the liquids directly to draw up or push up the liquids and to establish novel transfer methods and equipment based upon a new concept.

Accordingly, it is the object of the present invention to provide a novel transfer method utilizing air as a transferring medium wherein the materials to be transferred are not subjected to direct mechanical action but are worked on by the energy given by the pressure of compressed air, and wherein the air pressure used for transfer can be used repeatedly and continuously for further transfer, and thereby to provide a novel transfer method which can transfer any kind of flowing material smoothly at low cost and without any mechanical trouble and which is also applicable to dredging of water bottoms, gathering of minerals in the same and extracting submarine oil.

The air to be used in the present invention as the energy source is inexhaustible in the atmosphere, and therefore no cost problems occur, and since it is light and less affected by gravity than liquid, when used as an air pressure which acts on a transferred object, gravity problems can be resolved almost effortlessly. Therefore, the action of air can be transferred freely over a wide area within the atmosphere and can provide energy to objects at any place. Because of their mechanical structure, pumps operate directly on liquids to be transferred. Since the above-mentioned problems occur because of said direct action, the present invention interposes a medium between an object to be transferred and a mechanism. As for the medium, air is supreme because of its purity, simplicity, flexibility and relative freedom from gravitational influence.

When air is used as a medium, the transfer system is free from mechanical complications and friction or impact problems, and is then largely trouble-free. Furthermore, the energy which has been used for transfer action can be retained and used repeatedly and continuously when air valves are controlled electronically to open and close in a precise manner. As a result, the efficiency is greatly increased. With a suitable method of operation, it is possible to come close to isothermal compression, whereby it is theoretically possible to achieve efficiency extremely close to 100%.

JP-A-59 36027 discloses a device for feeding granular or powdery materials into a high-pressure blast furnace, in which material is fed by gravity from a first hopper at atmospheric pressure to a second, the second hopper is sealed and compressed gas introduced to raise the pressure within it to the operating pressure of the furnace, the material is fed by gravity from the second hopper to a third hopper, which is also at the higher pressure, and the pressure in the second hopper is then returned to atmospheric pressure. Two such devices operate alternately, and the gas discharged from one when the pressure is lowered is used to raise the pressure of the other.

US-A-2 149 633, on which the preamble of claim 1 is based, discloses an apparatus for dispensing beer by using compressed air to displace the beer from a barrel. In order to avoid the oxidation of the beer that might be caused by using fresh air, the gas remaining in the empty barrels is recovered by a suction pump which also compresses the gas for re-use.

The invention provides a method of transferring material utilising air as a transferring medium, comprising the repeated step of transferring material from a container by the pressure of compressed air and retaining the compressed air in the container as a replacement for the material transferred, and wherein the air retained after one transfer step is used as the transferring medium for a subsequent transfer step, characterised in that the compressed air retained after the said one transfer step is caused to expand out of the container in which it was retained and into the container containing the medium to be transferred in the subsequent transfer step, the pressure of the said retained compressed air acting on the medium to be transferred and the internal energy of the retained compressed air providing energy for the subsequent transfer step.

Now, the principles used in this invention are explained above.

(1) Trichery's Vacuum Tube

The first principle used is the principle of Trichery's vacuum tube. The height of a mercury column raised by atmospheric pressure is 76cm. Since the specific gravity of mercury is 13.59, when a water column is used instead of a mercury column, the column height is approximately 10m under the same pressure, because 76cm x 13.59 = 10.33m. Accordingly, if a pressure tank is filled with water and pressurized to 10 atm., the water can be raised to a height of approximately 100m (10m x 10 = 100m).

(2) Boyle's Law

The second principle used is Boyle's law. Namely, at a given temperature, the volume of gas (V) is inversely proportional to the absolute pressure (P), and the product of the pressure of a given mass of gas and its volume is fixed (P x V = fixed). This principle is also necessary for calculation in respect to control.

(3) Principle of Air Pressure

The third principle used is the principle of air pressure. Air pressure is wave motion. It travels at a velocity of 340m per second. The difference in the gravitational potential energy of air is negligible within a vertical range of several hundred meters. In other words, it does not possess appreciable weight in comparison with liquids. Within the "weightless" range, operational air can be freely moved with no regard to potential energy. The above property is called herein the "principle of air pressure". Suppose, for example, a pressure tank is filled with compressed air up to the gauge reading of 10 atm at ground level. The energy that the compressed air gives to the water in a tank placed 600m high above the ground, and the energy it gives to the same amount of water at ground level, or that the air gives to water at the bottom of a pit 500m below the ground, are the same, and in any of these cases, the compressed air can give the energy to the water within a period as short as two seconds. In other words, the air can raise a 100m water column regardless of where the tank is located. That proposition, of course, ignores the length of connecting pipes between the pressure tank and the tanks filled with water. But since in the case of continuous operation the air and liquids existing in the pipe can pass on their energy, the length and diameter of the pipe can be almost ignored.

Now, comparison is made between the present method and pumps.

Although there exist pumps which push up liquid using compressed air, and those which suck up liquid with negative gauge pressure, the present method is not any kind of pump. It is a novel transfer method where the whole energy used for the transfer of liquid is retained by an electronic control, and is repeatedly used for another transfer, and which can transfer objects by the transmission of energy over a long span, taking advantage of the fact that the energy source, i.e., the compressed air, is not appreciably influenced by gravity at normal atmospheric pressure, and is able to fully utilize buoyancy and differences in air pressure or water pressure with the use of pressure tanks, a compressor and control devices. A booster compressor is desirable.

In order to use air as a medium for transfer and to compress it to make it available to an energy source, it is necessary to provide a supply of compressed air using a compressor. When retaining the whole compressed air which has been used to push up liquid and repeatedly using the compressed air as the energy source, the compression to be made therein is not the compression of air starting from normal atmospheric pressure as in the first compression. Namely, there is conducted the intake-compression-delivery of the compressed air having a pressure given by the first compression. Thus since, from the second compression on, it is not air from the atmosphere but already compressed air that is compressed and delivered, the use of a booster compressor is desired. When a booster compressor takes in high-pressure compressed air, the compressor acts as a motor driven by the air and electricity is generated. The actual input value is below the calculated value, i.e. [(√3) x (force ratio of the motor) x (rated current) x (voltage)], and the comsumption of electricity is reduced to the same degree. Efficiency extremely close to 100% is theoretically possible with this saving. On the other hand, the mechanical structure of the compressor allows leakage or blow-by of a small amount of air due to the clearance between the piston and the cylinder. Thus, it is difficult to utilize 100% of the retained energy for the next transfer operation. However the loss from blow-by has been reduced to a minimum.

Appliances and instruments used in the present method are comparatively free from failure or wear, and thus their durability is greatly improved.

Because the present method uses air as a medium and compressed air as an energy source, and retains the energy for repeated continuous use with appropriate control, there is no mechanical structure in the path of the liquid. Any liquid containing viscous or solid substances which can pass through valves and pipes can be transferred without making contact with the mechanism, so that mechanical failure or wear does not result, and a great increase in durability can be achieved, as well as a significant reduction in the need to take measures against failure or accidents. The compressed air can be used not only as an energy source and for operational control, but also for other purposes such as stirring of liquids, application as a bubble pump or freeze prevention. For operational purposes, cylinder valves are very often used, but since this method handles high-pressure air and liquids with viscous or solid substances, such operational device as rotary actuators, electromagnetic valves and ball valves are preferred to be used. Such operations as opening or closing the ball valves at the instant when the liquids pass through them can be completely reliable.

The present method using air as a medium and compressed air as an energy source includes in itself anti-freeze measures for the winter season. Since it does not have mechanisms such as pumps, and the passage for liquids comprises valves and pipes only, where there is a risk of freezing in the winter residual liquid in the valves and pipes can be completely blown out if compressed air is sent through the passages for a short period of time after a transfer operation. Therefore, even in an extremely cold climate where the temperature goes 10 degrees below zero, this method makes it possible to transfer liquid without any trouble.

BRIEF DESCRIPTION OF DRAWINGS

Figure 1 illustrates a basic embodiment of the transfer method in accordance with the present invention showing Atmospheric Pressure operation;
Figure 2 illustrates another basic embodiment of the transfer method in accordance with the present invention showing Natural Pressure operation;

Figure 3 illustrates yet another basic embodiment of the transfer method in accordance with the present invention showing Added Pressure operation;

Figure 4 illustrates an embodiment of the transfer method in accordance with the present invention showing Alternate Added Pressure operation as a practical form of Added Pressure operation;

Figure 5 (A) and (B) illustrates the operation of a fluid element used in a pure fluid type pump for comparison purposes;

Figure 6 illustrates one example of a pure fluid type pump;

Figure 7 illustrates a method of transferring high pressure water in accordance with the Alternate Added pressure operation of the present invention;

Figure 8 illustrates a Continuous Added Pressure operation as another practical form of the Added Pressure operation;

Figure 9 illustrates the principle of operation of the present transfer method when applied to the dredging of water bottoms or the gathering of minerals:

Figure 10 illustrates an embodiment of water bottom dredging in accordance with the present invention;

Figure 11 illustrates another embodiment of water bottom dredging in accordance with the present invention;

Figure 12 illustrates an application of the present invention in an artificial reservoir; and

Figure 13 illustrates an embodiment of the present method to draw up water from the reservoir.

A more detailed explanation of various embodiments of the invention is given below with reference to the drawings.

Embodiment 1 - Atmospheric Pressure Operation

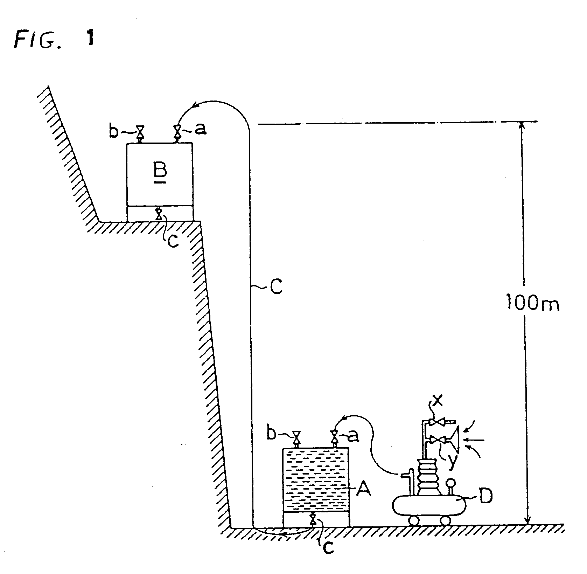

Figure 1 illustrates a basic embodiment of the transfer method in accordance with the present invention which is called Atmospheric Pressure Operation.

A pressure tank(first tank)A with a capacity of $1m^3$ is placed on the ground and filled with water. An empty tank(second tank)B with the same capacity is placed at a level of 100m above the ground and the first and second tanks are interconnected by a pipe C as illustrated. Each tank has three electrically-operated valves a, b and c. A compressor D has two valves x and y. The valve x admits air higher in pressure than the atmosphere, namely, compressed air, and the valve y admits air of a pressure equal to or lower than atmospheric pressure. In the drawing, the valves a and c of the first tank A are open and the valve b is closed. The valves a and b of the second tank B are open and the valve c is closed. Therefore, the second tank B is open to the atmosphere. The valve x of the compressor D is closed and the valve y is open. When the compressor takes air from the atmosphere to compress it and delivers the compressed air into the first tank A which is placed on the ground and filled with water, in compliance with Trichery's principle of vacuum tubes mentioned above, the water rises in the 100m pipe C and reaches the valve a of the second tank B when the gauge pressure reaches 10 atm. With air at a pressure somewhat higher than 10 atm continuously added, the water gradually flows into the second tank B and finally all of the water flows into the second tank B. That instant is sensed electronically, and the valve b of the second tank B is closed. Now, $1m^3$ of water has been transferred up to the height of 100m with the Atmospheric Pressure Operation. If suction pumps were used to achieve the same result, a multi-step pump with eight steps or so would be needed, assuming that the material being transferred was pure water.

In Atmospheric Pressure operation, the valve b of the send tank B is closed upon electronically detecting the instant when the $1m^3$ of water has been sent up into the second tank B, and the compressor is also stopped. If the air pressure in the first tank A is a little greater than atmospheric pressure plus 10 atm, all of the water can be pushed up. By closing the valve b of the tank B at the instant when all the water has been pushed up into the tank B, i.e. at the instant when $1m^3$ of water has been pushed up to a height of 100m, the energy inside the tank A is at a maximum and is retained in a reusable form of $1m^3$ of compressed air with 10 atm gauge pressure. The air in that condition can do a considerable amount of work when isothermally expanded, and from now on, that capability to do work is called active power. Though a pump can push or draw up $1m^3$ of water into the tank B, its active power disperses in the transfer process at the instant when the work is completed and is not retainable. In the Atmospheric Pressure transfer, however, the active power which sends up the water and reaches its maximum in the process is retained for another transfer, and the active power which is used for another transfer and reaches the maximum is further retained for yet another transfer. Thus the active power can be used repeatedly and continuously for transferring the water. Moreover, the active power used for the second transfer is quite large and strong because it has reached its maximum energy level at the end of the first operation. According to the principle of air pressure, that energy can be freely transferred at the velocity of 340m per second to any place within a three-dimensional region of several hundred meters radius as energy for the conveyance of water. It is explained in the next section on Natural Pressure Operation just how powerful is the $1m^3$ compressed air at 10 atm gauge pressure retained after the transfer of $1m^3$ water to the height of 100m.

Embodiment 2 - Natural Pressure Operation

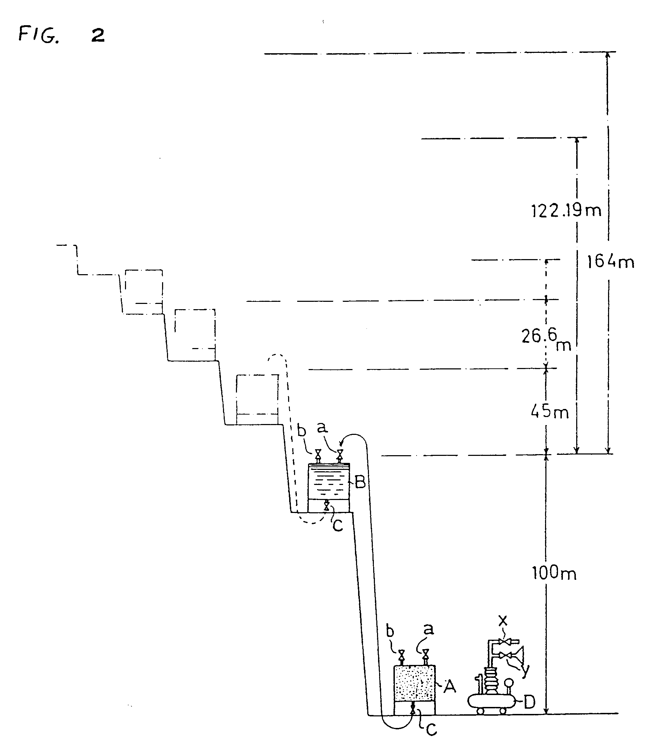

An explanation about Natural Pressure operation, which is related to the above Atmospheric Pressure operation, is given below with reference to Figure 2.

Figure 2 shows the stage where all the water has been pushed up into the second tank B by sending the compressed air from the compressor into the first tank which was filled with water. The first tank A is filled with compressed air having a gauge pressure a little higher than 10 atm., and the second tank B is filled with water displaced from tank A. Also, Figure 2 shows another tank in dotted lines at a level 45m higher than tank B. According to the "principle of air pressure" explained in (3) above, the compressed air in tank A which has a gauge pressure a little higher than 10 atm. can be caused to act on the water in tank B 100m above the ground. To do so, it is necessary only to open the valve c of tank A. It is not necessary to operate the compressor. All the water in tank B can then be transferred up to the third tank, but the transfer height is 45m.

The atmospheric pressure (1 atm. absolute under standard conditions) is often ignored when phenomena are observed in the atmosphere. If a pressure gauge indicates 10 atm in the atmosphere, 10 atm is only the gauge pressure, while the actual total pressure is 11 atm., assuming that the ambient pressure is the standard atmospheric pressure. Accordingly, the compressed air which has filled the first tank and has a pressure of a little higher than the atmospheric pressure plus 10 atm. has an absolute pressure of a little higher than 11 atm. In other words, because a pressure which slightly exceeds 11 atm. absolute has been applied to the water in the first tank set on the ground, all the $1m^3$ of water has been sent up into the second tank of 100m above the ground.

If the applied pressure is 11 atm., the maximum transfer distance is 100m under the standard atmospheric pressure, because of the calculation, 10m/atm. x (11-1)atm. If a pressure of a little higher than 5.5 atm. absolute pushes up the $1m^3$ water under standard atmospheric pressure, then the maximum transfer distance is 45m, according to the calculation, 10m/atm. x (5.5-1)atm. Now, Boyle's Law mentioned in part (2) above comes into play here: "At a given temperature, the product of pressure and volume of a gas of a given mass is fixed". According to this law, since the pressure in the first tank is approximately 11 atm and its volume is $1m^3$, the fixed product is 11 with the formula, PV = 11 atm x $1m^3$ = 11 (atm.$m^3$). When all the water in the second tank has been transferred to the third tank, the total volume of empty tanks A and B is $2m^3$ ($1m^3$ + $1m^3$). When these figures are applied in the formula PV = P'V' = 11 (fixed), P' x 2 = 11 and therefore P' = 11/2 = 5.5 can be obtained. Then, the pressure inside both tank A and tank B is 5.5 atm. Since the transfer distance under this pressure is 45m as explained above, the water in tank B has been pushed up into the third tank 45m above.

The compressed air retained in the tank A and used as an energy source possessed the maximum active power which was stored after transferring up the $1m^3$ water in tank A into tank B 100m above. By merely opening a valve, another 45m transfer has been achieved. At the same time, compressed air at 5.5 atm is retained in the total $2m^3$ of tank A and tank B. Now, Natural Pressure operation is defined as an operation where the active power works in itself, merely through opening and closing of the valves without any force applied from outside such as by compressors. It is possible to combine Atmospheric Pressure operation in Embodiment 1 and this Natural Pressure operation. For example, when providing the aforementioned $1m^3$ of water with potential energy to transfer it 100m, Atmospheric Pressure operation required compressed air at 10 atm gauge pressure, but by combining Atmospheric Pressure operation with Natural Pressure operation it is possible to transfer the water up to the 70m level with compressed air at 7 atm under Atmospheric Pressure operation, and to use Natural Pressure operation for the remaining 30m.

[PV = (7 + 1) x 1 = 8, P' x 2 = 8,
P' = 8/2 = 4, 10m(4-1) = 30m]

Thus, it is more efficient to transfer the water up to 70m using Atmospheric Pressure operation and to apply Natural Pressure operation for the remaining 30m up to the total of 100m.

As mentioned above, in Natural Pressure operation, the tank A and the tank B each possess 5.5 atm. of compressed air retained after the first transfer process. If this potential energy is used in a third successive Natural Pressure operation, using the maximum energy retained at the end of each operation, the total transfer height that this operation can achieve is as follows.

The total volume of tank A, tank B and the third tank is $3m^3$, and since the product of the total volume and the pressure is fixed, the following

results are obtained:

$P_4 \times 3 = 11$, $P_4 = 3.66$,
$10m \times (3.66 - 1) = 26.6m$

Theoretically, as long as Px exceeds 1, Natural Pressure operation is possible. When the series

$$\sum_{K=1}^{10} 10 \left(\frac{11}{K+1} - 1\right)$$

is summed by a computer, the obtained result is 122.19m. Namely, the maximum active power of the compressed air which was retained after 1m³ of water on the ground is pushed up to the level of 100m has an actual power to be able to push 1m³ water up to further 122m in addition to the 100m as shown in Figure 2. This is not a problem in kinetics, however, but should be calculated according to thermodynamics. The 122 m figure can also be determined merely using the tank capacity of 1 m³. When precisely calculated using the integral calculus, and in terms of thermodynamics, it is proven that the energy to be available is equal to that which can push the water up to the height of 164m.

Thus, it becomes clear how powerful the maximum energy of the active power retained in Atmospheric Pressure operation is. At the same time, it becomes clear that it is impossible to utilize the retained full active power in the above method wherein 1m³ tanks are used, and that some other alternative means should be devised. As this alternative, Added Pressure operation, to be explained below, has been provided in accordance with the present invention.

Embodiment 3 - Added Pressure Operation Negative Pressure Operation

Added Pressure operation and Negative Pressure operation are explained herein below. Added Pressure operation is a method wherein air that is already compressed, rather than air taken directly from the atmosphere, is compressed by a compressor for the use of transfer operation. Therefore, the operation in which compressed air, retained as an energy source after an Atmospheric Pressure operation, is taken and further compressed for another transfer, and the operation which utilizes compressed air retained in a receiver tank prior to the operation with the use of excess electricity, can both be called Added Pressure operation. Conversely, the operation wherein a compressor is used, under a negative gauge pressure, i.e. under such condition that the air inside a tank is below atmospheric pressure, so that the rarefied air is taken into the compressor for transfer of water, is called Negative Pressure operation. The operation wherein high pressure air inside a tank is taken and compressed for transfer of water is called Added Pressure operation but, as the compressor continues to take the air, the pressure inside the tank decreases, and when the pressure drops to the level of the atmosphere, the operation becomes Atmospheric Pressure operation, and thereafter the operation becomes Negative Pressure operation. In Negative Pressure operation, when air is taken by the compressor until there is a vacuum inside the tank, the water can be drawn up to the height of 10m under standard atmospheric conditions. The efficiency is decreased when the compressor is used at a negative gauge pressure, but the following operation facilitates the transfer. If, for example, in Atmospheric Pressure operation in Figure 1, the tank B is closed to the atmosphere and the valve b is connected to the valve x of the compressor D, when Atmospheric Pressure operation is conducted for the water in the tank A through the valve y of the compressor D, the air in the tank B is drawn through the valve x of the compressor D in order to keep the air pressure in the tank B slightly negative, while the air pressure in the tank B increases with the inflow of water. In this operation, two cylinders are required for the compressor.

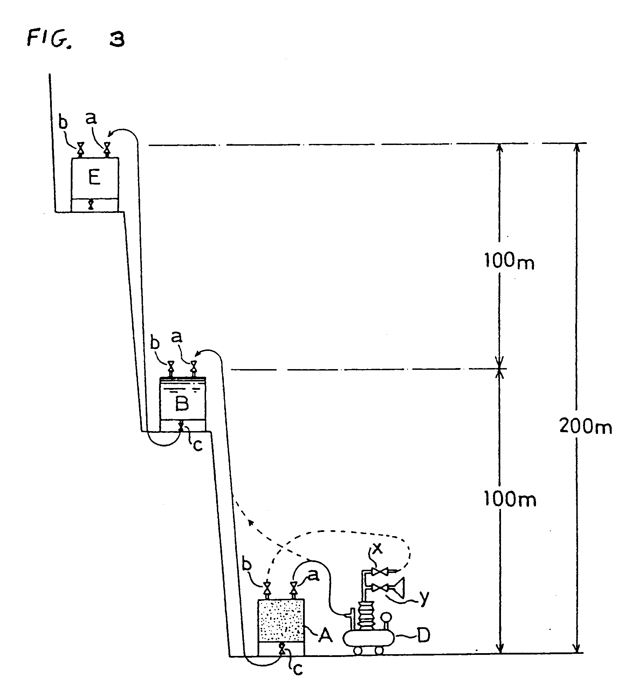

In Figure 3, the water in the first tank A has been pushed up into the second tank B 100m above, and the tank A is filled with the compressed air of 10 atm. gauge pressure retained after the operation. The third tank E is set 100m above the tank B. When the tank B and the tank E are connected by a pipe as shown, the water either rises close to the top of the 100m pipe, or clears the top and flows into the tank E in small quantities. Whether the water flows into the tank E or not depends on slight differences in such factors as the diameters of the connecting pipes and the locations of the control valves. Also at the same time, although the 10 atm pressure in the tank A drops slightly, it is acceptable to regard it as 10 atm. If the valve b of the tank A and the valve x of the compressor D are now connected and opened so as to send the compressed air at almost 10 atm. inside the tank A through the compressor to the valve a of the tank B, all the water in the tank B can be pushed up into the tank E. As mentioned before, in Natural Pressure operation, 1m³ of water was pushed up into a tank 45m above the tank B without using the compressor and without any force applied from outside, and 2m³ of compressed air at 4.5 atm. gauge was retained as a source of potential energy, and if the potential energy is repeatedly used in continuous Natural Pressure transfer operation, it is capable of pushing up the water 122m with the aid of 1m³ tanks, and theoretically 164m when calculated according to thermodynamics. In Added Pressure operation, considering that the compressed air at 10 atm. gauge pressure having so much usable energy stored within it is further caused to act on the material to be transferred by the compressor, it is naturally predicted that the necessary consumption of electricity and time can be greatly reduced as compared with Atmospheric Pressure operation. Laboratory results showed that Added Pressure operation achieved a transfer of all of the water in the tank B into the tank E with two fifths of the electricity consumption and in one fifth of the time required for Atmospheric Pressure operation. The efficiency of the operation is more than 70%, which far exceeds the standard efficiency of pumps, that is, 50%. It should be noted, however, that in this laboratory test, the inner diameter of the pipe used was 1 inch (25 mm), and the capacity of the booster compressor used was 2 h.p.(1.5 kW). In another test where compressed air of 3 atm. gauge pressure and a pipe with a two-inch (50 mm) internal diameter were used, the transfer time was 25% less than that with the one-inch (25mm) pipe. Similarly, if the two h.p. (1.5 kW) compressor, capable of output of 107 litre/minute, is replaced by a more powerful unit, e.g. 5 h.p. (3.75kW) or more, the output becomes larger which leads to further savings in both time and energy. In this Added Pressure operation, the efficiency is 100% in a thermodynamic calculation with the assumption of isothermal compression, and it is impossible to achieve any higher efficiency.

In practice, however, perfect isothermal compression cannot be obtained, and besides there should be estimated some loss caused by slight air leaks (blow-by) and friction between the cylinder and piston, and therefore 100% efficiency is not experienced. But it is not difficult to come close to isothermal compression, and the loss caused by blow-by has been reduced with improvements in the equipment, and an efficiency approaching 100% is not absolutely impossible. As explained above, Added Pressure operation is highly efficient. Following the initial Atmospheric Pressure operation, all of the usable energy retained can be repeatedly used in Added Pressure operation, theoretically with 100% efficiency of transfer. It is possible to effect various efficiency improvements, such as using a pipe with a larger inner diameter, increasing the number of pipes, or using a compressor with a larger capacity, in relation to the nature of the liquid to be transferred. It is of course possible to obtain a higher efficiency without conducting the less efficient Atmospheric Pressure operation, if Added pressure operation is conducted with the required amount of compressed air which is accumulated as an energy source in a pressure tank or receiver tank in advance using excess electricity.

Added Pressure operation is efficient as explained above. When the process is analyzed, however, it is divided into a first phase, Added Pressure operation, and a second phase, Atmospheric Pressure operation. If the latter Atmospheric Pressure operation is replaced by Added Pressure operation through the use of pre-stored compressed air, the efficiency always exceeds 100% for the energy supplied with the compressor in operation, provided that the stored compressed air is obtainable for an inexpensive price and therefore its cost is negligible.

Suppose the valve b of the tank E is open to the atmosphere. If all the air at 10 atm. gauge pressure in the tank A is transferred to the tank B, a vacuum is left in the tank A, and in the tank B the compressed air replaces the water which gets pushed up to the tank E. As mentioned previously, it is very inefficient to have a vacuum. Therefore when, in the process of transferring the compressed air, the pressure in the tank A drops to atmospheric pressure, an automatic control step is made, such as closing the valve x and opening the valve y of the compressor D to admit air from the atmosphere to continue Atmospheric Pressure operation for the tank B. Laboratory test results show that during the Added Pressure process, namely, during the period when the pressure in the tank A is falling from 10 atm. gauge pressure to atmospheric pressure, 93% of the water in the tank B has been pushed up into the tank E. Accordingly, Atmospheric Pressure operation is applied to the remaining 7% of the water. It is also possible to use Added Pressure operation for the remaining 7% as mentioned before, because Atmospheric Pressure operation is less effective. The efficiency increases considerably if the required amount of compressed air is prepared in advance in a receiver tank, so that it can be used as an energy source for the transfer of the remaining 7% of the water, instead of switching the compressor to Atmospheric Pressure operation, and the whole process is carried out using Added Pressure operation.

In either case, all the water in the tank B can be transferred to the tank E with much higher efficiency than in Atmospheric Pressure operation, and at the same time, the tank B retains compressed air at 10 atm. gauge as an energy source for the next transfer operation. The efficiency can be further increased with more sophisticated controls. It has already been mentioned that the efficiency in Added Pressure operation becomes 100% when it is calculated in terms of thermodynamics.

As in the Atmospheric Pressure operation and Natural Pressure operation explained previously, the maximum level of active power, i.e. a pressure of 10 atm. gauge in this model, is retained in the tank B. Therefore, once the initial Atmospheric Pressure operation is executed, the whole subsequent process can be incorporated into the complete cycle of the Added Pressure operation and succeeding operations are automatically performed in Added Pressure operation. Accordingly 100% efficiency can be maintained regardless of how many times the operations are repeated. In practice, however, with changes that are not exactly isothermal and a small amount of blow-by, the efficiency will be slightly less than 100%.

In this embodiment of Added Pressure operation, since the tank E is open to the atmosphere with the valve b open, the operation is switched to Atmospheric Pressure operation when the pressure in the tank A drops to the atmospheric level, and the remaining 7% of water is transferred in Atmospheric Pressure operation. The energy required to send up the 7% of water up to 100m height is theoretically equal to that required to compress $1m^3$ of air at atmospheric pressure to 10 atm. It has already been mentioned that the efficiency of Atmospheric Pressure operation is lower. In more detail, in terms of amount of work, Added Pressure transfer of the first 93% of the water takes 76% of the energy, while the Atmospheric Pressure transfer of the remaining 7% of the water takes 24% of the energy, which means that Atmospheric Pressure operation is less than a quarter as efficient as Added Pressure operation.

If the whole process is performed in Added Pressure operation, the efficiency exceeds 100% both theoretically and in practice. This can be easily realized by storing high pressure air in a large receiver tank utilizing the excess electricity generated during the night.

Embodiment 4 - Alternate Added Pressure Operation

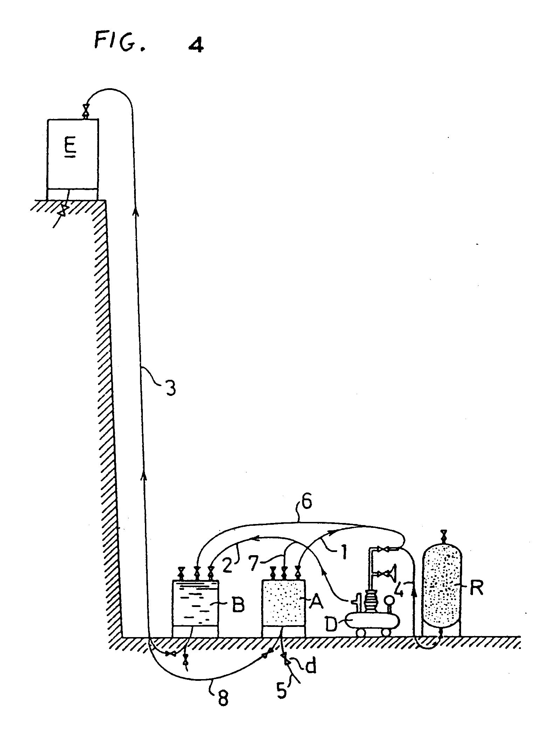

Figure 4 illustrates one embodiment of a practical Added Pressure operation for transferring liquid constantly to a height. In this operation the liquid can be transferred to a specific height continuously in Added Pressure operation by using two pressure tanks and retaining compressed air in them alternately as an energy source. This operation is useful in a wide range of applications, including sending up concentrated liquid organic fertilizers to multiple points on a mountain slope and, as explained later, for pumping back water to the upper reservoir at hydroelectric power plants using the excess electricity generated during the night.

As a preparatory step, the tank A is filled with compressed air at 10 atm. gauge and the tank B is filled with water. At a level 100m above the ground is the tank E, which is open to the atmosphere. To the right of the compressor D is a receiver tank R filled with high pressure compressed air. First, the compressed air in the tank A is sent into the tank B through pipe 1, compressor D and pipe 2. Then, the water in the tank B rises 100m through the pipe 3 and flows into the tank E. When the gauge pressure in the tank A drops to zero, that is to say, to the atmospheric level, the high pressure compressed air in the receiver tank R is transferred into the tank B through pipe 4, compressor D and pipe 2, in order to push up all of the remaining water into the tank E in Added Pressure operation. During the above process, once the pressure in the tank A has dropped to the atmospheric level, water starts to be poured into the tank A through pipe 5 so that the tank A is filled with water by the time all the water in the tank B has been transferred into the tank E. The compressed air which is retained in the tank B at a pressure slightly above 10 atm. gauge is sent into the tank A through pipe 6, compressor D and pipe 7 in order to send the water into the tank E through the pipe 8. Thus, by alternately transferring the material in the tanks A and B in Added Pressure operation, a continuous transfer into the tank E can be made.

It is also possible to control the operation as follows. Namely, at the instant when the pressure in the tank A drops to the atmospheric level, the valve d at the bottom of the tank A is opened and water is drawn through the pipe 5 into the tank A by the slightly negative gauge pressure caused by the continuous operation of the compressor D, and thereafter the valve d is closed as soon as it is detected that the tank A is filled with water. At that time, the compressor works by sending compressed air from the receiver tank R into the tank B.

As mentioned above, Alternate Added Pressure operation makes it possible to transfer material continuously by sending the compressed air alternately into the tanks A and B. The compressed air flows in a closed system comprising two tanks A and B, the compressor D, and the receiver tank R and does not flow out of the system. Futher, if the liquid sent up to the tank E is returned to the tanks A and B, both the air and the liquid can be circulated in a closed system. Also, by enclosing the compressor and receiver tank in an airtight box so that air leaking from the compressor can be put back into the receiver, the system can be made a complete closed system with a powerful pumping function, and then the following applications are feasible.

Recently, for locations such as nuclear reactors and chemical plants where radioactive or otherwise hazardous liquids are handled, interest has arisen in using highly reliable pure fluid type pumps, which involve no moving mechanism directly contacting the liquids.

An explanation is given below regarding cases where a fluidic element called Reverse Flow Diverter (RFD) is used.

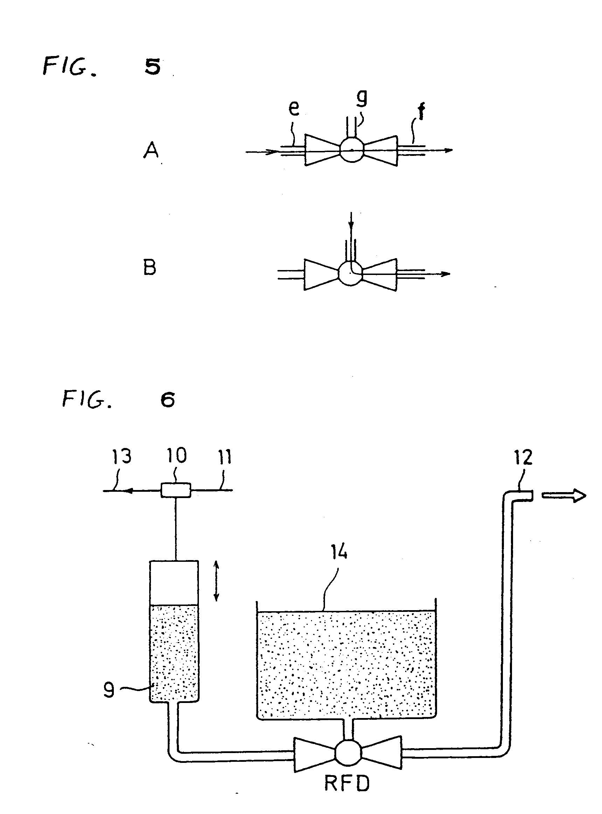

The element, as illustrated in Figure 5, is a mechanism with three arms, e, f and g, with e being at high pressure and f being at low pressure at all times. When g is at low pressure, liquid flows from e to f [see Figure 5 (A)], and when g is at high pressure, liquid flows from g to f [see Figure 5 (B)].

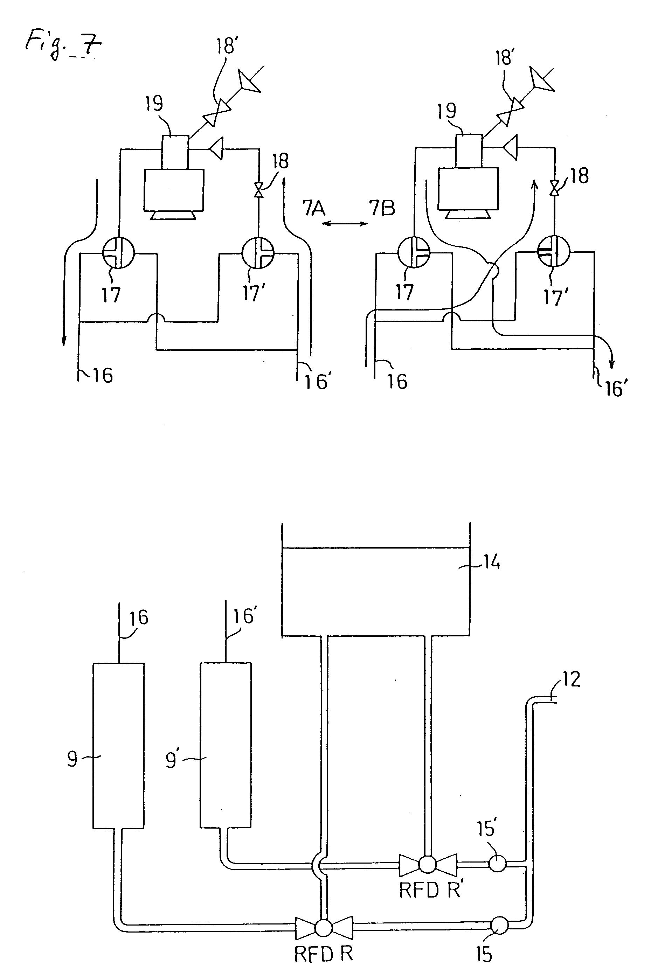

A device shown in Figure 6 is proposed as one model of a pure fluid pump with an RFD. In Figure 6, after a tank 9 is filled with water, the tank is connected with high pressure air 11 through an electromagnetic valve 10. Then, the high pressure air flows into the tank 9 and the water inside the tank flows towards a discharge outlet 12. When the tank 9 is filled with air, the electromagnetic valve is used to cut the connection between the tank 9 and the high pressure air 11, and to connect the tank with a negative gauge pressure air line 13. When the air in the tank 9 has been discharged and the pressure is negative, the water in a feed tank 14 flows into the tank 9 until it is full. High pressure water is then regularly sent to the discharge outlet 12 by repeating this process. However, this model is extremely inefficient because the energy required to produce high pressure air is enormous.

In order to minimize the energy consumed in producing high pressure air, the aforementioned Added Pressure operation can be applied. The proposed device is illustrated in Figure 7. This model has two tanks and two RFD elements with a feed tank 14 at a higher level. 15 and 15' are purely fluidic elements like snail elements which function as anti-reflux valves. The upper drawings in the figure show the switching mode of the system (7A - 7B).

[Preparatory Stage]

Tanks 9 and 9' are filled with water. Cocks 17 and 17' connecting pipes 16 and 16' are as shown in Fig. 7A. Valve 18 is closed and valve 18' is opened to draw in outside air to be compressed in a compressor 19 to the required compression level, and the compressed air is sent to the tank 9 through the cock 17 and the pipe 16. The water in the tank 9 is then pressurized and is sent to a discharge outlet 12 through RFD R leaving the tank 9 filled with compressed air. Although the pipe 16' is connected to the cock 17' and the valve 18, the tank 9' remains filled with water because the valve 18 is closed.

[First stage]

The valve 18' is closed and the valve 18 is opened and the system is put into the mode shown in Fig. 7B by changing the cocks 17, 17'. When the compressor 19 is put to work, the compressed air in the tank 9 is taken into the compressor 19 through pipe 16, cock 17' and valve 18 to be pressurized to the required compression level and then is delivered out of the compressor. The compressed air is sent to the tank 9', which is full of water, through the cock 17 and the pipe 16'. The water pressurized in the tank 9' is sent out to the discharge outlet through RFD R'. The air pressure in the tank 9 gradually decreases until finally it is filled with water from the feed tank 14 through RFD R. At the end of the first stage, the tank 9 is full of water and the tank 9' is full of compressed air.

[Second stage]

When the first stage is finished, the three-way cocks 17 and 17' are switched over so that the system above the pipes 16,16' is set in the mode shown in Fig. 7A. The compressed air in the tank 9' is drawn into the compressor 19 through the pipe 16' and the cock 17' to be compressed to the required compression level and is then delivered to the tank 9 through the cock 17 and the pipe 16. The water in the tank 9 is pressurized and sent out to the discharge outlet through RFD R. The tank 9 is filled with compressed air, and the water in the feed tank 14 flows into the tank 9' which is now at low pressure. At the end of the second stage, the tank 9 is full of compressed air and the tank 9' is full of water, the same condition as at the end of the preparatory stage. By repeating the procedures of the first and second stages, the water in the feed tank can be continuously pressurized and sent out to the discharge outlet.

As illustrated in the above, in transferring water with high pressure at nuclear reactors and chemical plants, eliminating direct contact with mechanical moving parts, Alternate Added Pressure operation can be used as a method to achieve efficiency as high as 100% assuming isothermal compression is available.

In chemical plants and nuclear reactors, repair work in the event of machine failure is extremely difficult. Human lives could be at stake in such work. Devices to be used for reactors should have a low probability of failure. It is also preferable that moving parts or mechanisms which have a higher probability of failure do not come into direct contact with radioactive water and are as far removed from the water as possible. It is believed that design improvements to achieve these ends are urgently needed.

Embodiment 5 - Continuous Added Pressure Operation

The above Alternate Added Pressure operation can efficiently transfer liquid to a point or points of a certain height, for example, 80 m above the ground with compressed air of 10 atm or so. However, several vertical operations with a 70m to 100m distance are necessary in order to transfer the objects to levels as high as 700m.

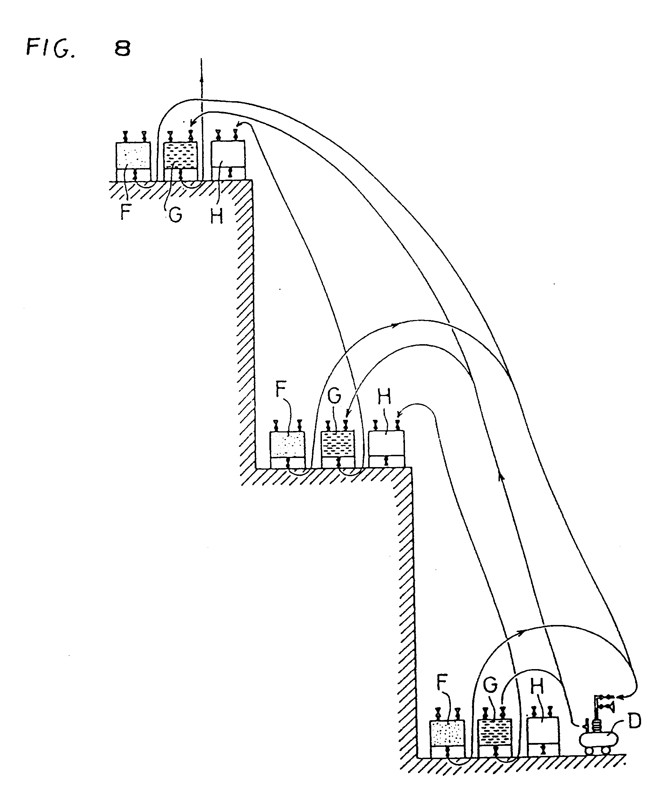

Illustrated in Figure 8 is Continuous Added Pressure operation which has been developed in order to permit fairly efficient transfer to such a high level with a single compressor.

Figure 8 shows a model which performs the transfer in a relay fashion over 70m to 100m spans. Only the first three levels are shown here, with the rest omitted. On each level are three pressure tanks, F, G and H from the left, where (as shown in Fig. 8) the tank F is filled with compressed air at 7 to 10 atm gauge pressure. The tank G is filled with water. The tank H is open to the atmosphere. On each level, the compressed air from the tank F is delivered into the tank G so that the water is sent up to the tank H on the next level. During that process, the tank H on the first level is filled with water from a supply (not shown). Then, the compressed air in the tank G is sent into the tank H on each level so that the water is transferred into the tank F on the next level. During that process, the tank F on the first level is filled with water from the supply. By repeating the above processes, the water can be continuously transferred in Added Pressure operation to high levels. Practically speaking, it is more efficient in this mode as well, to provide high pressure compressed air in a receiver tank in order to perform the whole process in Added Pressure operation.

Embodiment 6 - Dredging or Gathering of Minerals at Sea or Lake bottoms

All the models explained so far are under normal atmospheric pressure regardless of whether they are on the ground or in a pit several hundred meters below the ground. In this section, transfer operation under water is explained. Under water, the method can produce extremely high efficiencies that are inconceivable in the atmosphere. The principle of the operation is presented first.

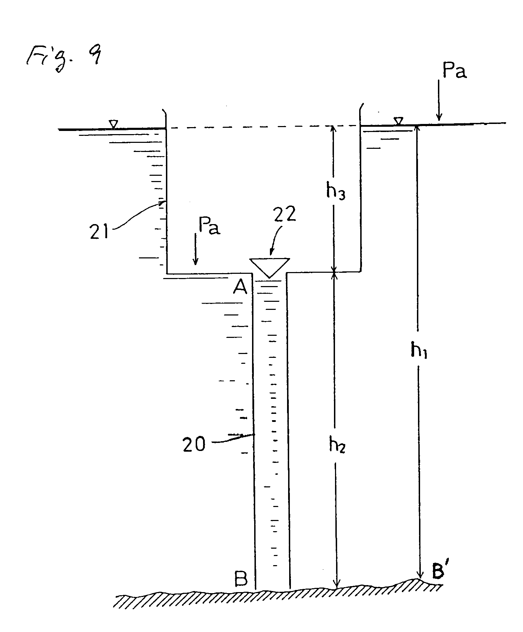

Figure 9 shows the principle. A tank 21 with a pipe 20 attached to its bottom is set under water. The upper portion of the tank is slightly above water, and the lower end of the pipe is very close to the water bottom. Now, consider what happens when a valve 22 is opened after the water in the tank has been discharged out with the valve closed.

The water in the pipe is exposed to atmospheric pressure Pa at the upper end A of the pipe and to the water pressure PB at the lower end B. PB is the same at all points on a level with B and is equal to the water pressure PB' at the depth of $h_1$. With the density of water being $\rho$, and gravitational acceleration g, the following equation is obtained;

$$PB = PB' = \rho gh_1 + Pa \qquad (1)$$

The water in the pipe is pulled downward by gravity, the magnitude of the gravitational force being $G = \rho gh_2 S$, assuming the pipe's cross sectional area to be S. When water starts going up the pipe, frictional resistance L proportional to the square of its velocity pulls the water downward. If the acceleration of the water with mass m ($m = \rho Sh_2$) inside the pipe is $\alpha$, the following equations are obtained according to Newton's Second Law;

$$m\alpha = F = PBS - PaS - G - L \qquad (2)$$

$$(\rho Sh_2)\alpha = (\rho gh_1 + Pa)S - PaS - \rho gh_2 S - L \qquad (3)$$

$$(\rho Sh_2)\alpha = (\rho gh_1 - \rho gh_2)S - L \quad (\rho Sh_2)\alpha = \rho gh_3 S - L$$
$$\rho h_2\alpha = \rho gh_3 - L/S \qquad (4)$$

If the average density of the water inside the pipe is $\rho'$, different from that of pure water by the reason of sand and sludge included, $G = \rho' gh_2 S$ can be substituted. From the equation (4), it is noted that the force given to the water inside the pipe is determined by the depth h of the tank, and that the larger $h_3$ is, the larger the force is. If $\alpha = 0$ with the water steadily ascending, $\rho gh_3 = L/S$ (5). Since L is proportional to the square of the velocity v of the water inside the pipe and to the length of the pipe $h_2$, it is deduced that the larger $h_3$ is, the larger v is.

Now, consider a case where sand, pebbles and minerals are mixed with the water close to the water bottom and are sent up to the tank by the above method. Being heavier than water, these objects are liable to sink even though they were once suspended in the water, so that the stirred water must be sent into the pipe before they sink down to the bottom again. Also, the deeper the water is, the larger $h_2$ is and therefore the larger L becomes. In order to overcome these factors and achieve a successful transfer, it is necessary that the tank depth $h_3$ be considerable. This transfer operation is called here Natural Pressure operation under water. Though it is a self-evident truth, the efficiency of Natural Pressure operation under water is extremely high. From this fact, it is proposed that sand and minerals be pushed up to a shallower water level using the extremely useful Natural Pressure operation under water and be further transferred to a remote place by using highly efficient methods such as Alternate Added Pressure operation etc. which are selected depending on the state of the place where the operation is performed. Thus, it is possible to avoid the conventional simple ineffective method which transfer sand and pebbles by pumps and other means from the water bottom to a remote place on land in a single operation.

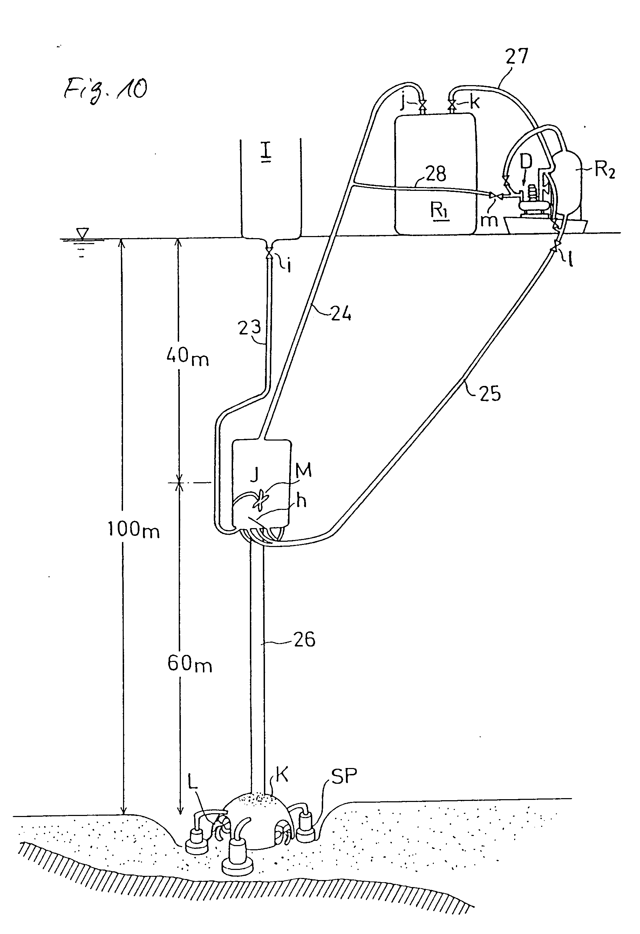

Here, an example of lake bottom dredging at a depth of 100m is explained with reference to Figure 10. In this operation, a tank I with a capacity of 100m$^3$ at the surface of the water and a tank J with the same capacity at the depth of 40m are connected by a pipe 23, and the tank J is then connected to a steel dome K placed on sand and pebbles at the lake bottom 60m below the tank J. The dome K is provided with sand pumps SP around it and impellers L to rake in sand and pebbles so that the mixture of sand and pebbles and water can be sent into the dome under electronic control. It is something like the cutter part of a sand pump boat, only on a larger scale. When it is necessary to prevent the lake water from getting muddy during the process of dredging, a larger dome with valves on its surface which open towards the inside of the dome is used. The impellers are installed inside the dome and the sand pumps are removed. The valves are closed when the impellers are operating inside the dome, and they are opened when the system is in Natural Pressure operation to allow water to come into the dome to make a mixture of the sand and water.

The tank J has a valve h at its bottom which operates in an up and down manner. It prevents sand and pebbles from dropping out once they are in the tank. Provided at the surface of the water is a receiver tank $R_1$ with a capacity of 200m$^3$ which is connected to the tank J via a pipe 24. Provided on a boat are a booster compressor D and a high pressure receiver tank $R_2$. A pipe 25 from the receiver tank $R_2$ is connected through multiple outlets with the tank J for stirring the sand mixture in the tank J. The pipe 26 connecting the tank J and the dome K accommodates any variation in the level of the lake bottom so that the whole system can stay in the current location.

The tank I at the surface and the receiver tank $R_1$ are empty and under atmospheric pressure. The receiver tank $R_2$ is filled with compressed air at approximately 10 atm. at all times. 10 atm. pressure is not always necessary, but it is desirable to use high pressure compressed air for blowing up sand accumulations, and such compressed air can be obtained and stored using inexpensive electricity during the night. Needless to say, since the tank J and the dome K are under water, the tank J is exposed to 4 atm. and the dome K to 10 atm. external water pressure. In this model, the receiver tank $R_1$ has a capacity of 200m$^3$, which is double that of the tank J, in order to avoid sending up a volume of air equal to the volume of the tank J in Atmospheric Pressure operation in the last stage of Added Pressure operation. For this reason, the water pressure at the depth of 40m is not fully utilized. It should be noted, however, that this model is selected for easy understanding.

[First Stage]

When compressed air at a pressure higher than 4 atm (taking atmospheric pressure at the surface as 0) is put into the tank J in Added Pressure operation from the receiver tank $R_2$ or in Atmospheric Pressure operation from the compressor D, the valve h closes and all of the water in the tank J is transferred up to the tank I. The efficiency here is the same as in Added Pressure or Atmospheric Pressure operation under the atmospheric pressure on the ground. The 100 tonnes of water transferred into the tank I is all discharged to the lake, and the valve i at the bottom of the tank I is closed. The tank I is left empty. Each component of the system is in the following condition.

Tank I :
Empty, at atmospheric pressure
Tank J :
Filled with compressed air at a pressure higher than 4 atm. gauge measured at the surface
Dome K :
Not in operation and at 10 atm. water pressure
Receiver tank $R_1$ :
Empty, at atmospheric pressure
Reveiver tank $R_2$ :
Filled with 10 atm. compressed air

[Second Stage]

Sand pumps SP and impellers L are operated to send sand and pebbles into the dome. At the same time, the valve j is opened and the valve k is closed on the receiver tank $R_1$. The compressed air at more than 4 atm. in the tank J flows into the receiver tank $R_1$ which has twice the capacity of the tank J and is at atmospheric pressure, so that the pressure inside the tank J drops rapidly. Then the mixture of water and sand made in the dome K rushes into the tank J through the pipe 26. The valve j is so regulated that the mixture flows into tank J with a proper mixture ratio. The transfer made herein is Natural Pressure operation using water pressure, buoyancy and pressure differences. The 200m$^3$ receiver tank $R_1$ which was at atmospheric pressure at the first stage receives the compressed air of 4 atm. gauge pressure from the

$100m^3$ tank J and the pressure in the receiver tank gradually increases. A sensor detects the moment when the tank J is filled with the sand mixture from the dome K and closes the valve j. At that point, the pressure in the receiver tank $R_1$ is 2.5 atm. gauge pressure, which prevents the sand mixture from flowing up nearer to the surface than a depth of 25m regardless the position of the valve j. In this second stage, Natural Pressure operation can transfer sand and pebbles, even those with relatively high densities, from quite deep water bottoms by using a properly sized receiver tank $R_1$. In this respect, the transfer in water can be extremely advantageous when compared to Natural Pressure operation taking place in the atmosphere. The condition of each component at the end of this stage is as follows.

Tank I :
Empty at atmospheric pressure
Tank J :
Filled with sand mixture from the dome
Dome K :
Operation stopped after sensing transfer of $100m^3$ sand mixture into the tank J
Receiver tank $R_1$ :
Filled with compressed air at approximately 2.5 atm. gauge pressure
Receiver tank $R_2$ :
Filled with approximately 10 atm. compressed air

[Third Stage]

The sand mixture in the tank J is starting to sink and accumulate at the bottom. A valve $\ell$ of the receiver tank $R_2$ is opened to send high pressure compressed air from the tank bottom to stir the mixture. At the same time, the valve j of the receiver tank R is closed and a valve k and a valve m of the compressor D are opened to transfer the sand mixture up to the tank I in Added pressure operation using the compressed air in the receiver tank $R_1$ through pipe 27, compressor D, pipe 28 and pipe 24. Since the 10 atm compressed air sent into the tank J from the receiver tank $R_2$ rushes up through the sand accumulation at the bottom of the tank, it can make even an extremely thick accumulation flow up. If necessary, a stirrer M is operated to stir the mixture. The energy required for the stirring is minimal, because stirring does not appreciably increase the gravitational potential energy of the mixture. Part of the compressed air remains in the sand mixture as bubbles and plays the role of air bubbles in an air bubble pump, which enhances the effectiveness of Added Pressure operation. The remaining compressed air goes up through the sand mixture and is combined with the compressed air for Added Pressure operation that is being delivered from the receiver tank $R_1$ by the compressor D, which works to reinforce the effectiveness of Added Pressure operation. In sum, the compressed air plays the four roles of supplemental energy at Added Pressure operation, reinforcement of Added Pressure operation, acting as an air bubble pump, and promoting stirring.

As soon as it is detected that all of the sand mixture in the tank J has been transferred up to the tank I, the valve $\ell$ is closed to stop stirring and the compressor is stopped. This is the end of the third stage. Here, unlike in the first stage, the 100 tonnes of liquid in the tank I is not lake water, but the sand mixture drawn up from the bottom of the lake. Now, it is desirable to use Alternate Added Pressure operation or Continuous Added Pressure operation, both applied Added Pressure operations mentioned earlier, in order to transport the mixture to a remote place. At the end of the third stage, the tank J is filled with compressed air of over 4 atm. pressure, and the pressure in the receiver tank $R_1$ drops close to atmospheric pressure. Thereafter, going back to the second stage, another Natural Pressure operation using water pressure can be conducted to transfer the sand mixture at the lake bottom 100m deep up to the tank J. By repeating the above process, dredging of water bottoms several hundred meters deep can be easily performed. In this model, the tank J is placed at a depth of 40m, closer to the water surface, for dredging of the lake bottom 100m deep. This is for the lake bottom water to be able to gush into the tank J. Similarly, in order to make the contents of the tank J gush up to the tank I, high pressure, perhaps 6 or 7 atm., is to be applied to the tank J. In principle, it is necessary to provide compressed air of at least a little over 4 atm. gauge pressure.

In normal atmospheric conditions, a transfer is possible only up to 15m initially, in Natural Pressure operation using 4 atm. gauge pressure air, when $1m^3$ tanks are used. In water, however, transfer of up to 60m is possible, as set forth in this model. So long as the technical capability exists, transfer at any depth can be achieved. When the density of the sand and pebbles is not so large, i.e., where they sink slowly in the water and it is thus not necessary to raise the mixture rapidly, it is possible to place the tank J at a shallower depth, for example, at a depth of 30m or even shallower, and the pressure to be added can be 3 atm gauge pressure or lower, which provides still higher efficiency. In this model, since the receiver tank $R_1$ is maintained at 2.5 atm gauge pressure, though the tank J is placed at the depth of 40m, it is virtually equivalent to a depth of 15m.

## Embodiment 7 - Dredging or Gathering Minerals in Sea or Lake Bottom

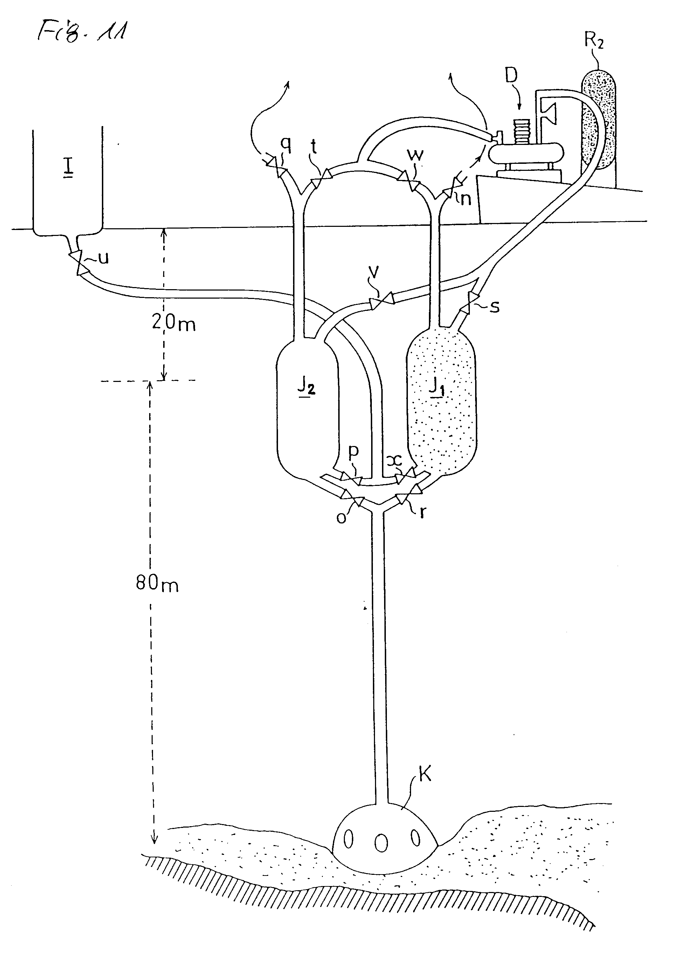

Figure 11 illustrates a method where there are two underwater tanks side by side for a more effective transfer.

Pressure tanks $J_1$ and $J_2$ are placed side by side at the depth of 20m. Though the contents of these tanks are to be transferred up to the tank I, the tank I does not necessarily have to be placed right above them and it can be placed quite far away from them. The pressure to be applied to the underwater tanks is 3 atm. surface gauge, 2 atm. of which is for the 20m transfer, and 1 atm. is for acceleration and agitation. Pressure input from the receiver tank $R_2$ is to be minimized here.

If the distance between the underwater tanks and the tank I is longer, the pressure to be applied can be larger than 3 atm. Continuous transfer is performed in the following process (all pressure values indicate gauge pressure).

[Preparatory Stage]

Tank $J_1$ :
Filled with 3 atm compressed air (Valve n is closed)
Tank $J_2$ :
Lower valves o and p are closed.
Upper valve q is open to the atmosphere, making pressure in $J_2$ equal to atmospheric pressure.
Receiver tank $R_2$ :
Filled with 5 atm compressed air
Dome K :
Not in operation

[First Stage]

Dome K :      In operation
Tank $J_2$:    When the valve o is opened (valve p still closed), sand mixture gushes up to $J_2$ by virtue of Natural Pressure operation from the 10 atm underwater point with 2 atm pressure difference at the entrance of the tank since the tank is at a depth of 20m. As soon as the tank is full, the valve o is closed, as is the valve q. (Valves q and n are both closed now and they stay closed to the atmosphere.)

[Second Stage]

As soon as the tank $J_2$ is full, the valves r and s are opened and the dome K and the compressor D start operating. The compressor D pushes the 3 atm. compressed air from the tank $J_1$ into the tank $J_2$ through the opened valve t. At the same time, the sand mixture in the dome K is pushed up by 10 atm. water pressure and is sent into the tank $J_1$ through the valve r in Natural Pressure operation with a 2 atm. pressure difference at the entrance. In previous Added Pressure models, the mode was switched over to Atmospheric Pressure operation or Added Pressure operation by a receiver tank when the pressure in the tank $J_1$ dropped from 3 atm. surface gauge down to atmospheric level. In this method, however, it is not necessary. That is, the sand mixture transferred into the tank $J_1$ displaces the compressed air in the tank $J_1$ with 2 atm. net pressure difference, which means that Added Pressure operation is performed throughout the process with 2 atm. pressure or more until the transfer is accomplished. The efficiency of this method is far higher than that of Added Pressure operation in the atmosphere, theoretically reaching 300% efficiency.

When all of the sand mixture in the tank $J_2$ has been transferred up to the tank I in Added Pressure operation with valves p and u open and valve o closed by the 3 atm compressed air from the tank $J_1$, the tank $J_1$ is filled with sand mixture. Since the tank $J_2$ is able to send up the whole of the sand mixture into the tank I in Added Pressure operation with a pressure slightly over 2 atm., blowby is not significant at all when the operation is performed with 3 atm. pressure.

At the end of the second stage, the components are in the following condition:

Tank $J_1$ :      Filled full with sand mixture
Tank $J_2$ :      Filled full with 3 atm (less blowby) compressed air

[Third Stage]

Here, the processes of the second stage are performed in a reverse fashion. The valves o and v of the tank $J_2$ are opened, the dome K and the compressor D are in operation, and the valve w is opened and the valve t closed to send compressed air to the tank $J_1$ and transfer the sand mixture up to the tank I through valves x and u in Added Pressure operation, while the sand mixture made in the dome K goes up into the tank $J_1$ in Natural Pressure operation.

By repeating the above process, it is possible to transfer the mixture continuously with extremely high efficiency. In order to increase the efficiency further, it is possible to add a third tank J and put the three tanks to work in a similarly coordinated fashion, in such a fashion that one cycle has 3 phases and each of the three tanks J lags one-third of a cycle behind the next. Using the above method, dredging and gathering minerals at deep water bottoms and collecting of submarine oil, which have been impossible so far, can be made possible. Currently, the most common dredging method is by sand pump boats. That method, however, is operable only down to 40m at the deepest and for mixtures containing only around 10% of sand. The Sand pumps used are of 4,000 to 10,000 horsepower (3 to 7.5 MW).

In terms of cost, energy consumption, durability and easy installment, the present method is incomparably superior to the current conventional method.

Embodiment 8 - Water Transfer Facilities for Reservoirs

When performing water transfers with this method, it is necessary to prepare pressure tanks of a size appropriate to the scale of the operation. When constructing a large reservoir, it is desirable to construct guide slopes at the side and bottom in order that sand and pebbles flowing into the reservoir accumulate on a spot or spots on the bottom, and to build at the bottom a water-transfer device of a size appropriate to the scale of the operation, using reinforced concrete, etc. Alternate Added Pressure operation is preferred for a water-transfer device in the water. If a dredging mechanism is also installed, the problem of sand accumulation can be resolved. Dredged sand can be used for any purpose efficiently. The water-transfer device is a semi-permanent device with a low probability of failure. It allows water transfer with much higher efficiency than Added Pressure operation in the open atmosphere.

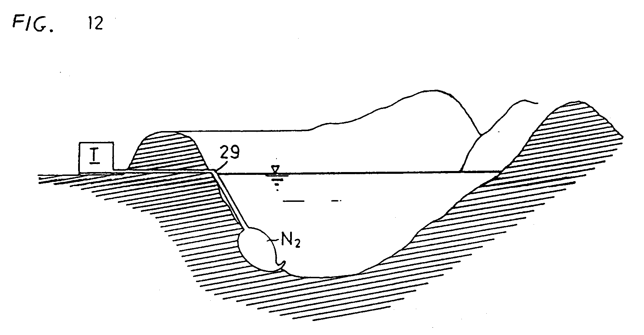

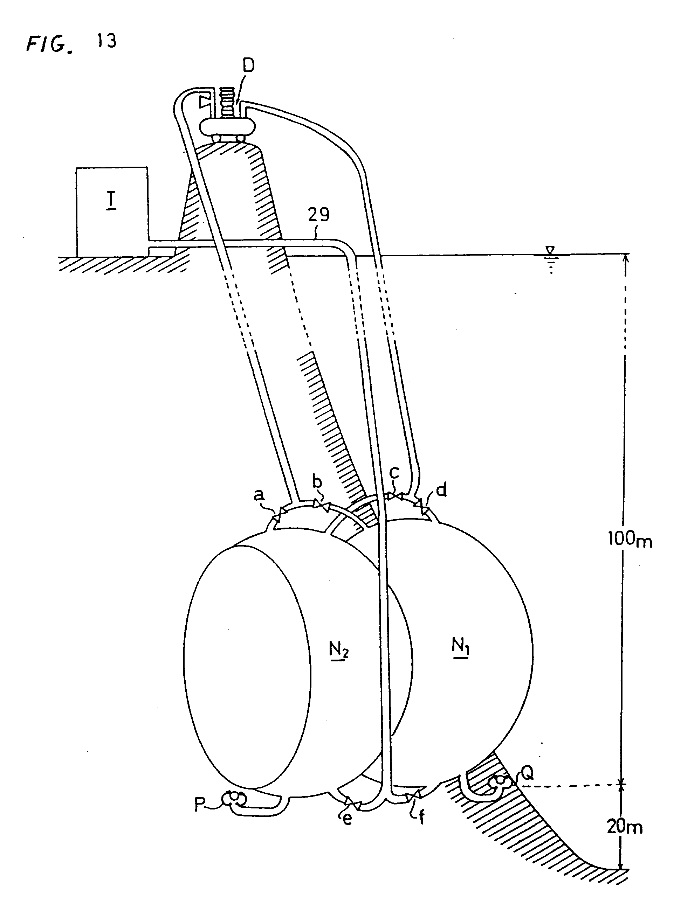

Figure 12 illustrates a cross-sectional view of an artificial reservoir surrounded by hills and banks. Figure 13 shows a transfer method with pressure tanks made of reinforced concrete, close to the reservoir bottom, where the Alternate Added Pressure operation is applied.

A dredging mechanism is installed at the 120m deep reservoir bottom and the water-transfer device for conducting Alternate Added pressure operation is constructed with reinforced concrete on the slope at 100m depth after the rocks and sand have been dug out. The main component of the device is a 2000m$^3$ pressure tank which is divided into two equal parts $N_1$ and $N_2$ with a partition installed at the center of the tank. Each of $N_1$ and $N_2$, therefore, has a capacity of 1000m$^3$. This device has, as is shown in Figure 13, six electrically-operated valves, and anti-reflux valves P and Q are attached to the bottom of $N_1$ and $N_2$ respectively. The body of the anti-reflux valve is ball-shaped, and its specific gravity is 0.9, slightly less than that of water. When the reservoir is 100m deep, if the pressure inside $N_1$ is 10 atm. or over on the gauge, the valve body sits on the valve seat and prevents any influx of water into the tank. If the pressure drops 0.1 atm. or more below 10 atm., the valve body leaves the valve seat due to water pressure and water flows into the tank $N_1$. The valve body is naturally moved up and down by water pressure which corresponds to the water depth. Therefore, if the reservoir level drops to 50m from 100m, the valves operate within a 0.1 atm. range of 5 atm. gauge pressure in order to alternately allow and prevent the influx of water.

The water surface of the reservoir is at the level of the surrounding land. Pipe 29, conveying water, is connected to a water tank T on the surrounding land through the bank of the reservoir.

[Preparatory Stage]

Pressure tank $N_1$ :
Filled with air at 10 atm. gauge pressure
Pressure tank $N_2$ :
Filled with 1000m$^3$ water
(Pressure indicates gauge pressure from now on.)

[First Stage]

Compressed air of 10 atm in $N_1$ is applied in Added Pressure operation to $N_2$. More precisely, the valve d of the tank $N_1$ and the valve a of the tank $N_2$ are opened and the water in the tank $N_2$ is sent up through the valve e to the water tank T on the ground.

The pressure in the tank $N_1$ drops as the compressed air flows into the tank $N_2$ and when it reaches the point where the pressure is 0.1 atm. below 10 atm., the valve body of the valve Q provided at the tank $N_1$ is pushed down by the 10 atm water pressure and water flows in. The 10 atm water acts in a fashion equivalent to a hydraulic instrument, due to Pascal's principle, and generates the enormous upward force arising from the bottom of $N_1$ , so that the whole process of Added Pressure operation is conducted with 10 atm. As soon as the water in $N_2$ has all been sent up to T and the tank $N_2$ is filled with 10 atm compressed air, the tank $N_1$ is filled with 1000m$^3$ of water.

[Second Stage]

Added Pressure operation is performed in a reverse fashion, with compressed air flowing to $N_1$ from $N_2$.

By repeating the above process, Alternate Added Pressure operation continues until the water level drops to the level of the valves P and Q, 100m below the water surface. In this method, the whole process of Added Pressure operation is performed with 10 atm pressure. Blow-by from the compressor on the bank is the only loss, which can be supplemented by atmospheric pressure or compressed air from a receiver tank.

The efficiency of this method is quite high. Though it might seem to have an efficiency of over several hundred percent when a large volume of water is transferred, that is, the water level is close to the upper level of the capacity, it is constantly 100%. This is because it involves a transfer of water, and not dredging. No energy is required to transfer water 100m deep to the level of the water's surface. Initially, when the water surface is at the same level as the land outside the bank, the water flows into the water tank T through the pipe 29 and requires no energy for the transfer. When the water level drops by 10m, the transfer process can be performed in Added Pressure operation with 9 atm water pressure, the efficiency of which is 100%. When the water level is down to 50m, it is still 100%. Because the amount of work L required for Added Pressure operation is;

$$L = V (Pm - Pc),$$

wherein

V is the volume of the transferable water,
Pm is the maximum pressure, and
Pc is the lowest intake pressure,
then, in this case, $L = V \times 5$ atm. This equals the amount of work required to transfer V volume of water 50m, namely the efficiency is 100%.

In water transfer, the efficiency is not as high as in dredging. However, since all of the water, even the water close to the bottom, can be sent up with constant 100% efficiency, it can be said that this is a highly advanced method in comparison with current conventional practices. Furthermore, the mechanism of the device is simple and therefore there is a much smaller risk of failure. Accordingly, it is a very surprisingly advantageous method in terms of installation costs, operating costs, durability, etc.

INDUSTRIAL APPLICABILITY

As explained above, the transfer methods in accordance with the present invention are most appropriate when transferring sludge-like liquids (such as fertilizers and mud), as well as water, to a place or places at a high level. For example it is advantageously available when a diluted organic fertilizer is spread over a wide area of a mountain or forest.

Also, at conventional hydraulic power plants, water in the lower reservoir is pumped up to the upper reservoir utilizing excess electricity during the night. In accordance with the present invention, however, if all or part of the excess electricity is converted into the energy of compressed air by a compressor and stored in a huge pressure tank, water can be transferred from lower ponds to upper ponds by using the compressed air, and then water transfer to related remote dams can be conducted with high efficiency regardless day or night for long periods of time.

In water bottom dredging, mineral gathering or submarine oil collecting, such factors as water pressure, buoyancy and pressure differences can be utilized, and then extremely efficient transfer of materials can be attained.

## Claims

1. A method of transferring material utilizing air as a transferring medium, comprising the repeated step of transferring material from a container by the pressure of compressed air and retaining the compressed air in the container as a replacement for the material transferred, and wherein the air retained after one transfer step is used as the transferring medium for a subsequent transfer step, characterised in that the compressed air retained after the said one transfer step is caused to expand out of the container in which it was retained and into the container containing the medium to be transferred in the subsequent transfer step, the pressure of the said retained compressed air acting on the medium to be transferred and the internal energy of the retained compressed air providing energy for the subsequent transfer step.

2. A method as claimed in claim 1, comprising the steps of transferring material from one container to a second and transferring the material from the second container.

3. A method as claimed in claim 2, wherein the compressed air retained in the said one container is used as a transferring medium for the transfer of the material from the said second container.

4. A method as claimed in any one of claims 1 to 3, wherein after a transfer step the retained compressed air is replaced by material which is transferred in a subsequent transfer step, and the transfer of material by compressed air and the replacement of compressed air by material to be transferred are repeated cyclically.

5. A method as claimed in claim 1, wherein the retained compressed air is caused to expand out of the first-mentioned container into an additional container and subsequently out of the additional container into a container containing medium to be transferred.

6. A method as claimed in claim 5, wherein the last-mentioned container is the same container as the first-mentioned container, and which includes the step of refilling that container while the said compressed air is retained in the said additional container.

7. A method as claimed in any one of claims 1 to 6, wherein the retained compressed air is forced by a compressor into a container of medium to be transferred in the said subsequent transfer step.

8. A method as claimed in any one of claims 1 to 7, wherein the material is brought into a said container by water pressure before it is transferred from that container.

9. A method as claimed in claim 8, wherein the material to be transferred is a mixture of sand and pebbles and water or minerals at the bottom of water.

10. A method as claimed in claim 8, wherein the material to be transferred is crude oil from a submarine oil field.

**Patentansprüche**

1. Verfahren zum Befördern von Material unter Ausnutzung von Luft als ein Transportmedium, welches den wiederholt ausgeführten Schritt des Beförderns des Materials von einem Behälter durch den Druck von Druckluft und dem Zurückhalten der Druckluft in dem Behälter als Ersatz für das beförderte Material aufweist, bei dem die nach einem Beförderungsschritt zurückgehaltene Luft als das Tranzportmedium für einen darauffolgenden Förderschritt genutzt wird, **dadurch gekennzeichnt,** daß die nach einem Förderschritt zurückgehaltene Druckluft sich im Behälter expandieren kann, in welchem sie zurückgehalten wurde und sich in den Behälter expandieren kann, welcher das zu befördernde Medium im anschließenden Förderschritt enthält, der Druck der zurückgehaltenen Druckluft das zu befördernde Medium beaufschlagt und die innere Energie der zurückgehaltenen Druckluft Energie für den darauffolgenden Förderschritt bereitstellt.

2. Verfahren nach Anspruch 1, welches die Schritte aufweist, gemäß denen das Material von einem Behälter zu einem zweiten befördert wird, und das Material von dem zweiten Behälter weiter befördert wird.

3. Verfahren nach Anspruch 2, bei dem die in einem Behälter zurückgehaltene Druckluft als ein Transportmedium für die Weiterbeförderung des Materials von dem zweiten Behälter genutzt wird.

4. Verfahren nach einem der Ansprüche 1 bis 3, bei dem die zurückgehaltene Druckluft nach einem Beförderungsschritt durch Material ersetzt wird, welches in einem darauffolgenden Förderschritt gefördert wird, und die Beförderung des Materials durch Druckluft und das Ersetzen der Druckluft durch zu beförderndes Material zyklisch wiederholt werden.

5. Verfahren nach Anspruch 1, bei dem die zurückgehaltene Druckluft sich aus dem erstgenannten Behälter in einen zusätzlichen Behälter expandiert und anschließend von dem zusätzlichen Behälter in einen Behälter expandiert, welcher zu beförderndes Medium enthält.

6. Verfahren nach Anspruch 5, bei dem der letztgenannte Behälter der gleiche Behälter wie der erstgenannte Behälter ist, und welches den Schritt umfaßt, gemäß dem dieser Behälter wieder aufgefüllt wird, während die Druckluft in dem zusätzlichen Behälter zurückgehalten wird.

7. Verfahren nach einem der Ansprüche 1 bis 6, bei dem die zurückgehaltene Druckluft durch einen Kompressor in einen Behälter für zu beförderndes Medium in dem darauffolgenden Beförderungsschritt gedrückt wird.

8. Verfahren nach einem der Ansprüche 1 bis 7, bei dem das Material in den Behälter durch Wasserdruck gebracht wird, bevor es von diesem Behälter weiterbefördert wird.

9. Verfahren nach Anspruch 8, bei dem das zu befördernde Material ein Gemisch aus Sand und Kieselsteinen und Wasser oder Mineralien am Meeresgrund ist.

10. Verfahren nach Anspruch 8, bei dem das zu befördernde Material Rohöl von einem Unterwasser-Ölfeld ist.

## Revendications

1. Procédé de transfert d'une matière utilisant de l'air comme milieu de transfert, comprenant l'étape répétée consistant à transférer la matière à partir d'un conteneur sous l'effet de la pression d'air comprimé et à retenir l'air comprimé dans le récipient pour remplacer la matière transférée, et selon lequel l'air retenu après une étape de transfert est utilisé en tant que milieu de transfert pour une étape ultérieure de transfert, caractérisé en ce que l'air comprimé retenu après ladite étape de transfert est amené à sortir du conteneur, dans lequel il était retenu, et à pénétrer dans le conteneur qui contient le milieu à transférer lors de l'étape ultérieure de transfert, la pression dudit air comprimé retenu agissant sur le milieu devant être transféré, tandis que l'énergie interne de l'air comprimé retenu fournit une énergie pour l'étape ultérieure de transfert.

2. Procédé selon la revendication 1, comprenant les étapes consistant à transférer une matière d'un conteneur dans un second conteneur et à transférer la matière à partir du second conteneur.

3. Procédé selon la revendication 2, selon lequel l'air comprimé retenu dans ledit premier conteneur est utilisé en tant que milieu de transfert pour le transfert de la matière à partir dudit second conteneur.

4. Procédé selon l'une quelconque des revendications 1 à 3, selon lequel, après une étape de transfert, l'air comprimé est retenu et remplacé par une matière qui est transférée lors d'une étape ultérieure de transfert, et le transfert de la matière au moyen de l'air comprimé et le remplacement de l'air comprimé par la matière devant être transférée sont répétés cycliquement.

5. Procédé selon la revendication 1, selon lequel l'air comprimé retenu est amené à sortir du conteneur mentionné en premier pour pénétrer dans un conteneur additionnel, puis sortir du conteneur additionnel pour pénétrer dans le conteneur contenant le milieu devant être transféré.

6. Procédé selon la revendication 5, selon lequel le conteneur mentionné en dernier lieu est le même conteneur que le conteneur mentionné en premier lieu, et qui inclut l'étape consistant à remplir ce conteneur alors que ledit air comprimé est retenu dans ledit conteneur additionnel.

7. Procédé selon la revendication 1 à 6, selon lequel l'air comprimé retenu est introduit à force par un compresseur dans un conteneur du milieu devant être transféré, lors de ladite étape ultérieure de transfert.

8. Procédé selon la revendication 1 à 7, selon lequel la matière est introduite dans ledit conteneur au moyen d'une pression d'eau avant d'être transférée hors de ce conteneur.

9. Procédé selon la revendication 8, selon lequel la matière devant être transférée est un mélange de sable et de cailloux et d'eau ou de minéraux au fond de la mer.

10. Procédé selon la revendication 1, selon lequel la matière devant être transférée est du pétrole provenant d'un champ pétrolifère sous-marin.

FIG. 1

FIG. 2

FIG. 3

FIG. 4

FIG. 5

A

B

FIG. 6

Fig._7

7A ←→ 7B

RFD R'

RFD R

FIG. 8

Fig. 9

Fig. 10

Fig. 11

FIG. 12

FIG. 13